(19) Europäisches Patentamt
European Patent Office
Office européen des brevets

(11) Numéro de publication: **0 136 940 B1**

(12) # FASCICULE DE BREVET EUROPEEN

(45) Date de publication du fascicule du brevet: **04.01.89**

(51) Int. Cl.$^4$: **C 08 G 18/60,** C 08 G 18/38

(21) Numéro de dépôt: **84401899.4**

(22) Date de dépôt: **24.09.84**

(54) **Procédé de fabrication d'objets moulés.**

(30) Priorité: **05.10.83.FR 8315859**

(43) Date de publication de la demande:
**10.04.85 Bulletin 85/15**

(45) Mention de la délivrance du brevet:
**04.01.89 Bulletin 89/01**

(84) Etats contractants désignés:
**BE CH DE FR GB IT LI LU NL SE**

(56) Documents cités:
**EP-A-0 013 461**
**DE-C- 750 427**
**DE-C- 932 454**
**FR-A-1 379 974**
**GB-A-1 243 238**

(73) Titulaire: **ATOCHEM**
**4 & 8, Cours Michelet La Défense 10**
**F-92800 Puteaux (FR)**

(72) Inventeur: **Cuzin, Daniel**
**Carentonne**
**F-27300 Bernay (FR)**
Inventeur: **Leriche, Christian Ato-Chimie S.A.**
**Japan Liaison Office Khuna-Taheiki Building 3Fl.**
**2-4-2 Nagato-Cho Chiyoda-Ku Tokyo 100 (JP)**
Inventeur: **Nawrot, Serge**
**46 le Dauphiné**
**F-27170 Beaumont-le-Roger (FR)**

**EP 0 136 940 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un procédé de fabrication d'objets moulés à base de polyamide par réaction injection et/ou moulage consistant à mélanger deux constituents d'une composition réactive avant injection et/ou moulage.

On sait que, pour diverses applications (électricité, mécanique, transports ou autre), les polyamides se sont substitués avantageusement aux résines thermodurcissables et même aux métaux que l'on utilisait pour fabriquer de nombreux objets. En vue de répondre aux exigences des industriels, les fabricants se sont efforcés de leur offrir des produits ayant un large domaine de qualités à partir des polyamides commerciaux. Parmi ces qualités, l'une des plus importantes est la fluidité à l'état fondu, car elle facilite la réalisation d'objets finis et permet d'améliorer certaines de leurs caractéristiques mécaniques.

La plupart des machines de transformation actuellement disponibles permettent un moulage par injection aisé des divers types et qualités de polyamides. C'est en particulier le cas des machines équipées d'une vis de plastification. Toutefois, la viscosité des polyamides de masse moléculaire élevée limite ou complique la réalisation par moulage par injection de pièces de grandes dimensions.

La présente invention vise à remédier à cet inconvénient en proposant une composition réactive à deux constituants principaux de faible viscosité à l'état fondu, à savoir des oligomères polyamides di-fonctionnels, d'une part, et des polyisocyanates et prépolymères d'isocyanates de faible masse moléculaire, d'autre part.

L'invention vise également à l'obtention de produits, notamment de composés polyamide-urée, dont les propriétés mécaniques se prêtent à des opérations de transformation telles que le moulage par injection ou l'extrusion.

Il est connu dans la technique de faire réagir des di- ou des polyisocyanates avec des polymères comprenant des groupes amines aux extrémités de la chaîne, mais, dans le cas de diamines aromatiques, les polymères obtenus ont un point de fusion élevé et, dans le cas de diamines à longue chaîne, les polymères résultants ont des propriétés mécaniques médiocres. Avec la composition réactive selon l'invention, l'emploi d'oligomères polyamides, de structure et masse moléculaire bien définies, permet d'introduire des séquences cristallines conférant aux polymères résultants des propriétés mécaniques avantageuses.

On a certes déjà proposé de réaliser des copolymères blocs polyamide-polyéther par réaction d'un polyisocyanate avec un polyamide de faible masse moléculaire (voir Journal of Polymer Science, Vol. 16, p. 643—645, L. Castaldo, G. Maglio et R. Palumbo: "Synthesis of polyamide-polyether block copolymer"), mais cette réaction est conduite en solution dans un solvant approprié, qu'il faut ensuite éliminer.

De même, le brevet U.S. 3 838 108 décrit la préparation d'un copolymère bloc par réaction de polymères à terminaisons isocyanates avec un composé comprenant un hydrogène actif, notamment avec des monomères utilisés pour la préparation de polyamides du type Nylon (marque déposée), mais il s'agit dans ce cas d'une polymérisation anionique (dont les inconvénients sont bien connus dans la technique), suivie d'un polycondensation en solution.

Selon le FR—A—1 379 971 il est connu de préparer des compositions adhésives par mélange d'un polymère aminé d'indice d'amine inférieur à 60 avec un polyisocyanate bloqué, mais de tels produits sont a priori inaptes à la fabrication d'objets moulés.

Enfin, différentes compositions pour moulage à base de polyamides sont décrites dans le brevets US 3 862 262, 3 944 629 et 3 993 709 ainsi que dans la demande de brevet européen 0 085 324, mais, là encore, des polymérisations anioniques sont mises en jeu.

La présente invention remédie à ces inconvénients en faisant réagir entre eux les oligoamides et les polyisocyanates à l'état liquide, c'est-à-dire à une température supérieure à leur point de fusion respectif, en l'absence de solvent.

L'invention a par conséquent pour objet un procéde de fabrication d'objets moulés utilisant une composition réactive liquide comprenant au moins deux constituants réactifs, caractérisée en ce que l'un desdits constituants est un polyisocyanate de faible masse moléculaire et l'autre un oligomère polyamide di-fonctionnel comprenant à chaque extrémité de la chaîne polyamide une fonction apte à réagir avec les isocyanates et choisie dans le groupe constitué par les fonctions amines et les fonctions acides carboxyliques, lesdits constituants étant présents à l'état fondu dans ladite composition réactive.

La réaction d'addition des oligoamides α,ω diamines ou dicarboxyliques et des polyisocyanates de la composition réactive suivant l'invention s'effectue suivant le schéma décrit par M.RAAB et al. dans Intern. J. Polymeric Mater., 1979, Vol. 7, p. 219—231, "Mechanical Properties of Multiblock Polyamide-Polyoxirane Copolymers", à propos d'une polymérisation en solution de prépolymères de polyamides et de polyoxiranes portant des groupes isocyanates aux extrémités de la chaîne ou de l'hexaméthylène diisocyanate.

L'oligomère polyamide peut être obtenu à partir d'un ou plusieurs ω-aminoacides, lactames, sels de diacides avec des diamines ou mélanges de diacides avec des diamines. On peut, bien entendu, utiliser leurs mélanges, ce qui donne des copolyamides.

La chaîne hydrocarbonée de ces aminoacides, lactames, diacides et diamines a, de préférence, un nombre d'atomes de carbone compris entre 4 et 14.

Ainsi peut-on employer les composés couramment utilisés dans la fabrication des polyamides, par

exemple: caprolactame, lauryl-lactame, acide amino-caproïque, œnantholactame, acides amino-7 heptanoïque, amino-11 undécanoïque, amino-12 dodécanoïque; mélanges ou sels de diamines telles qu'hexaméthylène diamine, nonaméthylène diamine, undécaméthylène diamine, dodécaméthylène diamine, métaxylylène diamine, bis-p.aminocyclohexylméthane, etc. avec des diacides comme téréphtalique, isophtalique, adipique, azélaïque, sébacique, dodécane dicarboxylique, glutarique etc. Ces amines ou/et acides peuvent, bien entendu, porter des substituants connus dans l'art.

Quand on désire obtenir des oligomères polyamides diamines, la polycondensation de tous ces précurseurs doit se faire en présence d'un excès d'une diamine. La quantité ou l'excès de diamine, qui agit en même temps comme limitateur de chaîne est calculée de façon à obtenir le poids moléculaire désiré. En effet, les diamines se fixent pendant la polycondensation comme constituant de la chaîne macromoléculaire du polyamide et, dans la mesure où les concentrations sont telles que l'on ait un excès de fonctions —NH2 par rapport aux fonction —COOH, ces diamines agissent comme limitateurs de chaînes.

Des diamines utilisables sont, par exemple, les diamines, de préférence aliphatiques, ayant 4 à 22 atomes de carbone comme, par exemple, l'éthylène diamine, la tétraméthylène diamine, l'hexaméthylène diamine.

Des diamines cycloaliphatiques ou aromatiques peuvent éventuellement convenir.

Les masses moléculaires moyennes des polyamides α,ω diamines peuvent varier dans un intervalle assez large. Elle se situent entre 300 et 15 000 et sont comprises de, préférence, entre 1 000 et 6 000.

La teneur en fonctions amines fixées aux extrémités des chaînes polyamides peut être déterminée par dosage par potentiométrie.

De façon analogue, les oligoamides α,ω dicarboxyliques utilisables dans le cadre de l'invention peuvent être préparés à partir d'aminoacides, lactames, sels de diacides avec des diamines, ou mélange de diacides avec des diamines, ou mélanges de trous ces monomères, analogues à ceux cités plus haut et dont la chaîne hydrocarbonée a un nombre d'atomes de carbone compris entre 4 et 14, dont la polycondensation est effectuée en présence d'un excès d'un diacide organique dont les fonctions carboxyliques sont de préférence fixées aux extrémités de la chaîne hydrocarbonée.

Ces diacides carboxyliques se fixent pendant la polycondensation comme constituants de la châine macromoléulaire du polyamide, en particulier aux extrémités de cette chaîne, ce qui permet d'obtenir un polyamide α-ω dicarboxylique.

Ce diacide agit par ailleurs comme limitateur de chaîne et c'est pourquoi on introduit un excès de diacide α-ω dicarboxylique par rapport à la quantité nécessaire pour obtenir le polyamide dicarboxylique. L'importance de cet excès permet de conditionner la longueur de la chaîne macromoléculaire et par consequent le poids moléculaire moyen du polyamide.

Les diacides utilisés comme limitateur de chaîne dans la réaction de synthèse du polyamide et permettant également d'obtenir des polyamides à groupements carboxyliques terminaux sont des diacides carboxyliques, de préférence aliphatiques, ayant de 4 à 20 atomes de carbone comme, par exemple, les acides succinique, adipique, subérique, azélaïque, sébacique, undécanedioïque, dodécanedioïque. Des diacides du type cycloaliphatique ou aromatique peuvent éventuellement convenir.

Les masses moléculaires des oligoamides α,ω dicarboxyliques utilisables dans le cadre de l'invention sont comprises entre 300 et 15 000 et, de préférence, entre 1 000 et 6 000.

Les composés porteurs de groupes isocyanates sur leur chaîne sont choisis parmi les espèces monomères ou oligomères dont la fonctionnalité est au moins égale à 2, mais les masses macromoléculaires moyennes de ces composés peuvent varier selon leur nature et leur composition. Cependant, elles sont limitées par des exigences d'ordre pratique telles que la viscosité, par exemple.

Pour pouvoir être utilisés dans l'invention, les composés porteurs de fonctions isocyanates doivent être caractérisés par un point de fusion, une réactivité vis-à-vis des oligoamides α,ω diamines ou dicarboxyliques et une viscosité à l'état fondu compatibles avec la mise en oeuvre du système aux températures de travail envisagées. La viscosité à l'état fondu de ces composés est inférieur à 10 Pa.s (10 000 cps) à 170°C.

Ces composés porteurs de groupes isocyanates peuvent être à base de composés hydrocarbonés de nature aliphatique, aromatique ou aliphatique-aromatique. On peut citer notamment les diisocyanates classiques utilisés couramment dans le domaine des peintures, à savoir le 2,4 ou le 2,6 toluylène diisocyanate (T D I), le 4,4' diphénylméthane diisocyante (M D I), le 1,4 ou le 1,6 hexaméthylène diisocyanate (H D I), le diisocyanate de 1,4 cyclohexyle, le 3-isocyanatométhyl 3,5,5 triméthylcyclohexylisocyanate (I P D I) et les triisocyanates tels que le triphénylméthane triisocyanate par exemple.

Ces composés pourront être modifiés pour obtenir des structures plus complexes et plus encombrées (stériquement), en faisant réagir par exemple les espèces monomères entre elles. A titre d'exemples non limitatifs de composés supérieurs résultant de la dimérisation ou de la trimérisation d'isocyanates, on peut citer les produits contenant un cycle urethidione de formule:

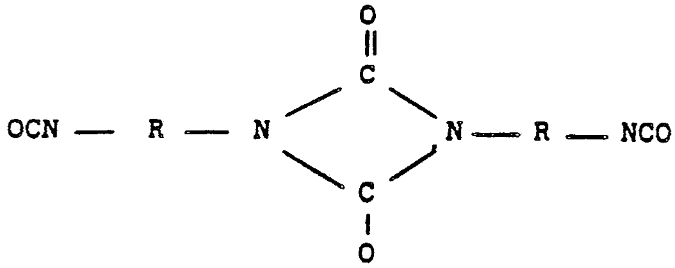

et les produits de cyclotrimérisation d'isocyanates par chauffage du monomère isocyanate en présence de catalyseurs, de formule:

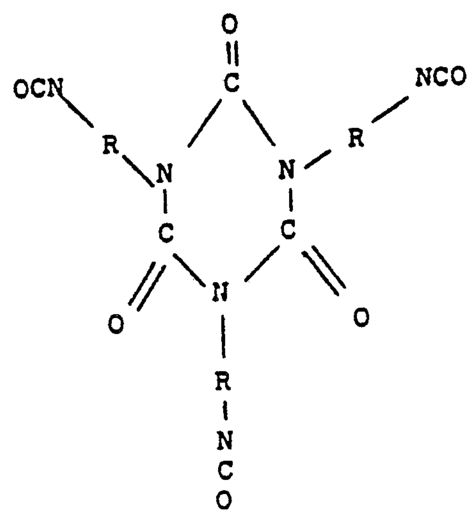

Les catalyseurs utilisés peuvent être des sels métalliques ou des phosphines par exemple.

Les composés oligomères porteurs de groupes isocyanates utilisables dans l'invention peuvent être également des prépolymères résultant de la réaction d'addition d'un diisocyanate sur un polyesterpolyol ou un polyétherpolyol. A titre d'exemples non limitatifs, on peut citer les produits commercialisés sous l'appellation Multiflex par la Société Rousselot, ou les produits commercialisés sous l'appellation Isonates par la Société Upjohn. La viscosité de ces prépolymères est faible: elle se situe avantageusement entre 60 et 10 000 mPas (60 cps et 10 000 cps) à 25°C.

Enfin, il est possible d'utiliser des composés dont les groupes isocyanates sont bloqués par une molécule organique qu'on appelle agent masquant.

Les polyisocyanates bloqués ne réagissent comme les polyisocyanates classiques qu'à température élevée. Contrairement aux polyisocyanates libres, les polyisocyanates bloqués peuvent être mélangés à une température modérée avec des polyamides $\alpha,\omega$ diamines sans qu'il y ait réaction et ce n'est qu'à des températures nettement plus élevées que l'agent masquant est libéré et que les groupements isocyanates libérés peuvent réagir avec les fonctions terminales. Les composés ci-dessous sont des agents masquants pour les isocyanates, classés par order de stabilité thermique décroissante de leurs composés d'addition avec la fonction isocyanate:

— alcools primaires,
— phénol,
— caprolatame,
— acétylacétate de ......,
— phtalimide,
— imidazole.

Dans le cadre de l'invention, on a utilisé de préférence comme isocyanates bloqués des adducts d'isocyanate et de caprolactame. En effet, ces composés s'obtiennent très facilement et ne se dissocient en leurs constituants qu'à partir de températures de l'ordre de 140—160°C.

Les composés porteurs de groupes isocyanates bloqués par l'ε-caprolactame, utilisés dans l'invention, sont caractérisés par une cinétique de décomposition du composé d'addition très lente à 140—150°C, mais très rapide dès que l'on atteint des températures de l'ordre de 180°C.

A titre d'exemples non limitatifs de composés à fonctions isocyanates bloquées par l'ε-caprolactame, on peut citer le TDI bloqué, l'IPDI bloqué l'Adduct 1530 B commercialisé par Hüls (obtenu par cyclotrimérisation d'IPDI), l'Adduct T1890 (commercialisé par Hüls), le Crélan K L5 25—25 commercialisé par BAYER, ainsi qu'un grand nombre de produits résultant de la condensation de composés possédant des groupements ayant au moins un atome d'hydrogène actif vis-à-vis des fonctions —NCO, condensation

suivie d'un blocage des fonctions —NCO libres restantes par l'ε-caprolactame.

La réaction d'addition du composé polyisocyanate avec l'oligoamide α,ω diamine est effectuée en mettant en contact lesdits réactifs à l'état fondu, sous agitation, à des températures supérieures aux points de fusion du polyamide α,ω diamine utilisé et du composé polyisocyanate. Les températures choisies pour cette réaction doivent être suffisamment élevées pour maintenir le milieu réactionnel fondu dans un état suffisamment fluide permettant de réaliser par agitation un bon contact entre les réactifs.

Les températures choisies au-dessus des points de fusion du polyamide (ou copolyamide) α,ω diamine ou dicarboxylique et du composé polyisocyanate sont comprises entre 120°C et 300°C, mais se situent de préférence entre 140°C et 250°C.

Afin que la réaction d'addition des deux composés s'effectue dans des conditions favorables à l'obtention d'un polymère ayant les propriétés voulues, il est nécessaire, en fonction des applications du procédé, de choisir un rapport molaire

$$\frac{NCO}{NH_2 \text{ ou } COOH}$$

compris entre 0,75 et 1.

Pour pouvoir réaliser un bon contact entre les réactifs et ce pendant une durée suffisamment longue, de telle manière que la réaction soit complète, il est nécessaire que la réactivité du composé polyisocyanate soit grande mais contrôlée, afin de l'adapter aux conditions de réaction choisies.

La réactivité des composés porteurs de groupes isocyanates vis-à-vis des polyamides α,ω diamines ou dicarboxyliques dépend beaucoup de la nature et de la structure des radicaux liés à la fonction isocyanate. En général, les isocyanates de nature aromatique sont les plus réactifs, les aliphatiques ayant une réactivité intermédiaire, tandis que celle des isocyanates de type cycloaliphatique est la plus faible.

A titre d'exemple, les composés diisocyanates dont la liste suit sont classés dans cette liste par réactivité décroissante vis-à-vis des polyamides α,ω diamines:

— toluylène diisocyanate
— diphénylméthane diisocyanate,
— hexaméthylène diisocyanate,
— dicyclohexylméthane diisocyanate,
— isophorone diisocyanate.

D'une façon générale, l'encombrement stérique contribue à réduire notablement la réactivité des fonctions isocyanates, alors que la présence de groupements électro-attracteurs les rend plus réactives vis-à-vis des groupes amines du polyamide α,ω diamine ou des groupes carboxyliques du polyamide α,ω dicarboxylique.

Le contrôle de la réactivité à haute température peut s'effectuer également par l'utilisation de composés porteurs de fonctions isocyanates bloquées (ou masquées) cités précédemment. Dans ce cas, le choix de l'isocyanate dépendra de la température et de la cinétique de décomposition du composé d'addition, libérant les fonctions isocyanates.

Comme déjà indiqué, les isocyanates bloqués utilisés préférentiellement dans l'invention sont des adducts d'isocyanates et de caprolactame. Le caprolactame libéré au cours de la réaction de déblocage demeure dans le polymère obtenu. Il peut, dans ce cas, présenter des inconvénients dans les produits finis, par exemple en exsudant ou en diminuant certaines propriétés mécaniques par son caractère plastifiant.

Pour remédier à cet inconvénient, il est possible de polymériser le caprolactame résiduel in situ en ajoutant au mélange réactionnel un activateur de polymérisation anionique de l'ε-caprolactame en quantité très faible, de l'ordre de 2 parties pour 1 000, par rapport au mélange. Comme activateur de polymérisation anionique du caprolactame, on peut citer notamment le caprolactamate de sodium et le N-acétyl caprolactame.

Selon la fonctionnalité du composé isocyanate utilisé, on peut obtenir au choix un polymère thermoplastique (cas, par exemple, du diisocyanate) ou thermodurcissable (isocyanate de fonctionnalité moyenne supérieure à 2), ce qui constitue un avantage de la composition réactive conforme à l'invention. Il est également possible d'introduire dans le mélange polyamide α,ω diamine ou dicarboxylique/diisocyanate, une molécule organique de faible masse moléculaire, de fonctionnalité supérieure à deux et comportant des fonctions réactives vis-à-vis des groupements isocyanates. Cette molécule, qui tend à former un réseau au sein du polymère, peut être soit une polyamide, soit un polyol. Dans ce cas, le polymère obtenu révèle des propriétés thermodurcissable.

On peut aussi ajouter au mélange polyamide α,ω diamine ou dicarboxylique/diisocyanate, en proportion variable, un composé α,ω diol tel que les polyétherdiols obtenus par polymérisation d'époxydes ou les polyesterdiols obtenus par polycondensation de glycols et de diacides.

Les polymères obtenus à partir de la composition réactive selon l'invention constituent un autre objet de cette invention.

Cette composition réactive permet de préparer des semi-produits ou des objets finis, composites ou non, par tout procédé de transformation adapté à la faible viscosité de ces produits dans les conditions de réactions retenues. Des additifs tels que des stabilisants contre la chaleur ou des antioxydants, et des

charges, telles que les fibres de verre, peuvent être ajoutées au mélange réactionnel avant les opérations de transformation, de préférence au cours de l'opération d'addition de l'isocyanate sur les oligoamides α,ω diamine ou dicarboxylique, afin d'améliorer les propriétés du produit ou d'en modifier les caractéristiques en fonction des exigences d'une application déterminée.

Une première application de la composition réactive conforme à l'invention consiste en la réalisation d'objets moulés. Du fait de la fluidité à l'état fondu des constituants de cette composition, on peut, sans inconvénient, réaliser par moulage des pièces de très grandes dimensions, ce qui n'est pas possible, ou du moins beaucoup plus difficilement, avec les polyamides, dont la viscosité est beaucoup plus élevée. Pour la même raison, il est difficile de renforcer les objets moulés en polyamide à l'aide d'une trame solide telle qu'une nappe de fibres de verre noyées dans la masse, alors que la composition selon l'invention se prête parfaitement à la réalisation par moulage d'objets ainsi renforcés.

La réalisation d'objets moulés à l'aide de la composition conforme à l'invention peut être effectué par la technique dite R.I.M. (Réaction Injection Moulage) décrite par exemple dans Modern Plastics International, Avril 1981. Il suffit d'adapter la réactivité du système de manière à pouvoir mélanger rapidement les deux constituants dans une tête de mélange et à injecter dans un moule une composition suffisamment fluide pour remplir totalement le volume libre dans le moule. On peut ainsi obtenir des produits thermoplastiques ou thermodurcissables à base de polyamide, renforcés ou non par les charges citées ci-dessus.

Ainsi qu'il ressortira d'un Exemple donné dans la suite de la présente description, les polymères obtenus à partir de la composition réactive selon l'invention présentent en outre d'excellentes propriétés d'adhésivité.

Une autre application de la composition conforme à l'invention est donc la réalisation de produits adhésifs.

Cette intéressante propriété des polymères préparés à partir de la composition réactive conforme à l'invention débouche en outre sur d'autres applications de cette composition, par exemple à la réalisation de panneaux dits "sandwich" comprenant deux feuilles métalliques, par exemple en aluminium, réunies par une couche du polymère obtenu à partir de la composition réactive.

On notera que des panneaux peuvent être réalisés à partir d'un processus de fabrication en continu par laminage de deux feuilles métalliques dont l'une est enduite de système réactif.

Cette enduction peut être réalisée, par exemple, selon la technique dite "knife over roll coater" ou "reverse roll transfer coater"; le mélange réactionnel est alimenté à chaud, à l'état fondu et de façon continue ou discontinue au niveau des différents réservoirs d'enduction.

La fluidité, la basse viscosité et les propriétés adhésives du mélange réactionnel sont également particulièrement adaptées à la mise en oeuvre du procédé dit de pultrusion.

Le mélange réactionnel est alimenté à chaud, à l'état fondu et de façon continue au niveau de l'entrée d'une filière de pultrusion, vient "mouiller" de façon intime des fibres longues, par exemple des fibres de verre ou de carbone, et permet l'obtention de matériaux composites sous forme de profilés pultrudés en continu.

Les polymères résultants peuvent être avantageusement commercialisés sous forme de granulés et une autre application de la composition réactive conforme à l'invention consistera en la production de tels granulés de polymère à l'aide d'une extrudeuse maintenue à une température appropriée et alimentée, d'une part, en polyisocyanate, d'autre part, en oligoamide diamine ou dicarboxylique, à partir de deux réservoirs distincts où ces constituants sont maintenus à l'état fondu. Dans cette application, le rapport

$$\frac{NCO}{NH_2 \text{ ou } COOH}$$

est de préférence voisin de $\frac{3}{4}$.

Les exemples qui suivront visent à illustrer l'invention et n'ont pas de caractère limitatif.

Exemple 1

On prépare d'abord un oligoamide-11 α,ω diamine de la manière suivante:

Dans un réacteur en acier résistant à la pression, muni d'un agitateur à ancre et d'un chauffage électrique, on introduit 804 g d'acide amino-11 undécanoïque et 46,4 g d'hexaméthylène diamine pure.

On effectue cinq purges sous une pression de 5 à 6 bars d'azote pour éliminer l'air et éviter les réactions d'oxydation (jaunissement). Après décompression, on chauffe le mélange à 210°C et on porte la pression de l'appareil à 10 bars, en admettant de l'azote comprimé.

On décomprime ensuite lentement (30 à 40 minutes) et, lorsque la pression est revenue à 1 bar, on laisse la polycondensation se poursuivre pendant 4 heures à 220°C sous agitation (50 t/mn) et balayage d'azote (30 l/h).

On recueille un oligoamide-11 α,ω diamine de masse Mn = 2000, dont le point de fusion est de 176°C. Sa viscosité à l'état fondu est faible (inférieure à 500 mPas à 180°C).

On fait fondre 100 g de cet oligoamide dans un réacteur maintenu à une température de 180°C. On ajoute ensuite 28 g du produit commercialisé sous l'appellation d'Adduct 1530 B (composé triisocyanaté

obtenu par trimérisation de l'isophoronediisocyanate, puis blocage de fonctions —NCO par l'ε-caprolactame). Ainsi, l'équimolarité entre les groupements amino du polyamide α,ω diamine et les groupements isocyanates que l'on fait réagir l'un sur l'autre est respectée.

A 180°C, il est possible de mélanger l'oligoamide α,ω diamine fondu et l'Adduct 1530 B sans augmentation notable de la viscosité. Celle-ci augmente progressivement après mélange, dans les minutes qui suivent. Le blocage de l'agitation de la matière dans le réacteur se produit au bout des durées suivantes:

| Température (°C) | Durée de l'agitation jusqu'à prise en masse (mn) |
|---|---|
| 180 | 2 |
| 200 | 1 |
| 220 | < 1 |
| 240 | 0,5 |

Exemple 2

Cet exemple concerne la préparation d'un polyamide 6 à fonctions —$NH_2$ terminales, par polycondensation de caprolactame en présence d'hexaméthylène diamine.

Dans un réacteur en acier résistant à la pression, muni d'un agitateur à ancre et d'un chauffage électrique, on introduit 1 184 g de caprolactame, 120 g d'hexaméthylène diamine pure et 55 g d'eau.

On chauffe le mélange jusqu'à 240°C et on porte la pression de l'appareil à 10 bars en admettant de l'azote comprimé. On maintient cette température et cette pression pendant 3 h 30 minutes. Au bout de ce temps, la pression est ramenée à 1 bar et on laisse la polycondensation se poursuivre pendant 2 heures sous balayage d'azote.

On recueille 1 950 g de polymère de Mn = 2 000, déterminée par dosage des groupes terminaux —$NH_2$.

Exemple 3

Cet exemple concerne la réaction d'un polyamide 11 α,ω dicarboxylique.

Dans un réacteur Dumas de 2 litres muni d'un agitateur à ancre et résistant à la pression, on introduit 972 grammes d'acide aminoundécanoïque (4,836 moles) et 115 grammes d'acide dodécanedioïque (0,5 mole).

Après avoir purgé trois fois à l'azote et laissé une pression de 7 bars d'azote, on ferme le réacteur et on commence à chauffer le mélange. Au bout de 45 minutes à la température de 212°C, la pression étant ajustée à 10 bars, on effectue en 40 minutes une décompression jusqu'à la pression atmosphérique, puis le mélange réactionnel est agité à la vitesse de 30 tours/minute pendant 2 heures à 240°C sous balayage d'azote, le débit d'azote étant de 30 litres/heure.

Le polymère recueilli a une masse moléculaire moyenne Mn égale à 2 048 déterminée par dosage des groupes terminaux —COOH.

On fait réagir ce polymère avec un oligomère α,ω-diisocyanate à base IPDI, de masse Mn = 1 051.

La polymérisation est conduite en masse dans un réacteur de 2 litres, en faisant réagir une mole de polyamide pour une mole d'oligomère diisocyanate. Afin d'éviter l'intervention des réactions secondaires, on travaille au départ avec un excès de polyamide α,ω dicarboxylique. Ceci est réalisé en coulant lentement sur le polyamide fondu l'oligomère diisocyanate.

Les quantités utilisées et les conditions opératoires sont les suivantes:

- — quantité de polyamide-11 dicarboxylique: 255 g,
- — quantité d'oligomère α,ω diisocyanate: 368 g,
- — température: 210°C,
- — vitesse d'agitation pendant l'addition de la séquence —NCO: 55 tours/min,
- — durée totale de la réaction: 4,75 h.

On suit la réaction en mesurant le couple moteur traduisant la puissance du moteur développée pour faire tourner l'agitateur à la vitesse programmée.

Le polymère obtenu est très peu coloré, légèrement poreux.

Exemple 4

On reprend l'essai de l'Exemple 1 en faisant réagir un polyamide-6 α,ω dicarboxylique, de masse

$\overline{Mn}$ = 1340 sur l'oligomère diisocyanate de masse $\overline{Mn}$ = 1 051 précédemment utilisé.

Le polyamide-6 α,ω dicarboxylique, de masse $\overline{Mn}$ = 1 340 est préparé de la manière suivante:

Dans un réacteur résistant à la pression et muni d'un agitateur à ancre, on introduit 15 100 grammes de caprolactame, 1 898 g d'acide adipique et 1 200 g d'eau. On chauffe jusqu'à ce que la température du milieu réactionnel atteigne 260°C (à quoi correspond une pression de 15 bars), qu l'on maintient pendant 3 heures. On détend jusqu'à la pression atmosphérique et jusqu'à 230°C en 2 heures, puis on balaye par de l'azote pendant 450 minutes et on extrude sous légère pression d'azote.

L'oligomère obtenu a une teneur de 6,75% de caprolactame libre et 0,29% d'acide adipique non combiné.

On fait réagir le polyamide-6 α,ω dicarboxylique ainsi préparé sur l'oligomère diisocyanate utilisé à l'Exemple 1, dans les conditions suivantes:

- quantité de polyamide-6 dicarboxylique: 433 g,
- quantité d'oligomère α,ω diisocyanate: 280 g,
- température de la réaction: 250°C,
- vitesse d'agitation pendant l'addition de la séquence —NCO: 55 tours/min,
- durée d'addition de la séquence —NCO: 1 h,
- vitesse d'agitation après addition: 20 t/min,
- durée totale de la réaction: 5,5 h.

Le produit résultant est plus coloré et plus poreux que celui obtenu avec le polyamide-11.

La viscosité inhérente mesurée dans le m-crésol à 25°C est de 0,94.

Exemple 5

Cet exemple concerne la mise en oeuvre de la composition réactive selon l'invention dans une extrudeuse à double vis du type WERNER ZSK 30. Les vis ont un profil tel qu'elles forment malaxeur et permettent d'introduire des charges ou additifs dans la matière fondue.

Les températures de l'extrudeuse sont fixées de la manière suivante:

- dans la zone d'alimentation (zone à pas de transport longs): 190°C;
- dans la zone de réaction (zone à pas de transport courts): 200°C;
- au niveau de la filière, en vue d'assurer une réaction optimale: 220°C.

On mélange à l'état solide au tonneau:

- 100 parties d'oligoamide-11 α,ω diamine, préparé à l'exemple 1, sous forme de poudre fine;
- 19,4 parties d'Adduct 1530 B, également sous forme de poudre fine.

Le rapport stoechiométrique $NH_2$/NCO est de 4/3.

Le mélange ainsi réalisé est ensuite introduit dans l'extrudeuse avec un débit de matière de 7 kg/h (temps de séjour: 2mn) et l'on fabrique ainsi 20 kg de polymère qui sortent de l'extrudeuse sous forme de granulés.

Exemple 6

Cet exemple concerne l'introduction de charges dans la composition réactive selon l'invention.

On utilise la même extrudeuse que dans l'Exemple 5, mais, dans la première zone de réaction, la température est portée à 210°C, au lieu de 200°C précédemment, en raison d'un temps de séjour plus court du mélange (1 min 40 s).

On introduit d'abord 70 parties du mélange d'oligoamide-11 α,ω diamine de l'exemple 1 et d'Adduct 1530 B (comme pour l'Exemple 5), puis, en aval, à l'entrée de la zone de réaction, 30 parties de fibres de verre de type OCF 429 zz (longueur: 3 mm) commercialisées par OWENS CORNING. L'introduction du mélange réactif s'effectue avec un débit de 7 kg/h et l'alimentation en fibres de verre avec un débit de 3 kg/h.

15 kg de polymère chargé ont été réalisés dans ces conditions.

Exemple 7

Les granulés de polymère fabriqués selon l'Exemple 5 ont été utilisés pour mouler par injection diverses éprouvettes des types utilisés pour tester les propriétés mécaniques d'un matériau, telles que les haltères type ASTM, les barreaux type Charpy et des barreaux de dimensions 172 × 12,7 × 6,4 ou 3,2 mm.

Le profil de température de la machine à injecter était de 50, 200 et 200°C.

Des pièces similaires ont été réalisées sans difficulté avec le polymère chargé de fibres de verre préparé à l'Exemple 6.

Les différentes éprouvettes ont été soumises aux essais mécaniques usuels (traction, allongement, choc Charpy, choc IZOD AE) et ces essais ont prouvé que le polymère non chargé conforme à l'invention, réalisé dans l'Exemple 5, possède des propriétés équivalentes à celles de polyamides 11 et 12 plastifiés vendus par la Société ATOCHEM sous les dénominations respectives BESNO P40TL et AESNOL P40TL, tandis que le polymère chargé de fibres de verre réalisé à l'Exemple 6 a des propriétés comparables aux polyamides 11 et 6 chargés à 30% de fibres de verre vendus sous les dénominations BZM30 et RZM30 (Voir tableaux I et III ci-après).

TABLEAU I

Propriétés des pièces moulées avec les granulés de l'Exemple 5

| TESTS | Granulés de l'Exemple 5 | AESNO P 40 TL | BESNO P 40 TL |
|---|---|---|---|
| TRACTION | | | |
| Allongement : % | 131 ± 13 | 350 | 350 |
| Contrainte : M Pa | 37,4 ± 2 | 48 | 65 |
| FLEXION | | | |
| Flèche : mm | 20,4 | | |
| Contrainte : M Pa | 23 | | |
| Module : M Pa | 551 | 360 | 350 |
| CHOC CHARPY | | | |
| .SE | | | |
| % casse | NC* | NC* | NC* |
| 20°C résilience $kgf\ cm\text{-}cm^{-2}$ | - | | |
| % casse | 90 | NC* | NC |
| -40°C résilience $kgf\ cm\text{-}cm^{-2}$ | 50,5 ± 15 | | |
| .AE | | | |
| % casse | 100 | NC* | |
| 20°C résilience $kgf\ cm\text{-}cm^{-2}$ | 29,6 ±11,1 | | 16 |
| % casse | 100 | | |
| -40°C résilience $kgf\ cm\text{-}cm^{-2}$ | 2,0 ± 0,4 | 7 | 9,5 |
| CHOC IZODAE | | | |
| % casse | 100 | | |
| 20°C résilience $kgf\ cm\text{-}cm^{-2}$ | 4,8 ± 2,4 | | |
| % casse | 100 | | |
| -40°C résilience $kgf\ cm\text{-}cm^{-2}$ | 2,7 ± 1,3 | | |

*NC : ne casse pas.

TABLEAU II

Propriétés mécaniques des pièces moulées avec les granulés de l'Exemple 6.

| TESTS | Granulés de l'Exemple 6 | BZM 30 | RZM 30 |
|---|---|---|---|
| TRACTION | | | |
| Allongement : % | 6 | 6 | 5 |
| Contrainte : M Pa | 101 ± 1 | 95 | 140 |
| FLEXION | | | |
| Flèche : mm | 18 | | |
| Contrainte : M Pa | 117 | | |
| Module : M Pa | 4084 | 5000 | 6000 |
| CHOC CHARPY | | | |
| .SE | | | |
| % casse | 100 | | |
| 20°C résilience kgf cm-cm$^{-2}$ | 58,8 ± 4,3 | 73 | 66 |
| % casse | 100 | | |
| -40°C résilience kgf cm-cm$^{-2}$ | 29,4 ± 3,0 | | 58 |
| .AE | | | |
| 20°C % casse | 100 | | |
| résilience kgf cm-cm$^{-2}$ | 17,7 ± 0,7 | 22 | 15 |
| -40°C % casse | 100 | | |
| résilience kgf cm-cm$^{-2}$ | 12,1 ± 0,6 | 19,5 | 9 |
| CHOC IZOD AE | | | |
| 20°C % casse | 100 | | |
| résilience kgf cm-cm$^{-2}$ | 20,7 ± 1,2 | 23,4 | |
| -40°C % casse | 100 | | |
| résilience kgf cm-cm$^{-2}$ | 13,6 ± 1,1 | 17,9 | |

Des pièces de forme beaucoup plus complexe, telles que des carburateurs d'automobiles, ont été réalisées aisément par moulage par injection à l'aide de ce polymère.

Exemple 8

Cet exemple concerne le moulage de pièces par compression.

On utilise l'oligoamide-6 α,ω diamine préparé à l'Exemple 2, de masse $\overline{Mn}$ = 2 000. Le point de fusion de cet oligomère est de 175°C environ. Sa viscosité à l'état fondu est faible (<500 mPas à 180°C).

200 g de cet oligomère sont fondus dans un bécher à 190°C. On ajoute alors 56 g d'Adduct 1530 B.

Le mélange fondu est agité pendant 2 minutes. La viscosité augmente et le mélange fluide est versé dans un moule maintenu à 190°C. La force de fermeture du moule est de 15 tonnes. La durée de maintien du mélange dans le moule est de 5 minutes.

Après refroidissement, on obtient une plaque translucide, rigide, de dimensions 140 mm × 140 mm et d'épaisseur 6 mm. Cette plaque peut être découpée pour obtenir des éprouvettes dont les caractéristiques mécaniques sont excellentes.

Exemple 9

On reprend l'essai de l'Exemple 8, mais en ajoutant un activateur de polymérisation du caprolactame, en l'occurrence le caprolactame de sodium (0,15 g pour 200 d'oligoamide).

Le dosage du caprolactame résiduel montre une diminution significative de la teneur des échantillons en ce composé, résultant de l'addition du caprolactamate de sodium.

Exemple 10

56 g d'Adduct 1530 B sont préchauffés pendant une heure à 170°C afin de débloquer toutes les fonctions isocyanates.

Le dégagement de caprolactame est important (fumées blanches au-dessus du bécher).

On verse ensuite ce composé "débloqué" dans 200 g d'oligoamide-11 α,ω diamine fondu à 190°C. Le mélange est agité pendant une minute, puis versé dans un moule, où il est maintenu à 190°C pendant 5 minutes.

Après refroidissement, on obtient une plaque rigide, translucide d'aspect homogène ayant une surface bien lisse.

Exemple 11

150 g d'oligoamide-11 α,ω diamine (Mn = 2 000) préparé à l'exemple 1 sont fondus dans un bécher maintenu à 190°C. On ajoute ensuite 52,5 g d'Adduct T1890 distillé, qui est un polyisocyanate à base d'IPDI. Il contient des cycles isocyanates et il a une fonctionnalité comprise entre 3 et 4. Il est caractérisé par un point de fusion non franche vers 100°C.

Le mélange est agité pendant 35 s, puis est versé dans un moule, où il est maintenu à 190°C pendant 5 minutes.

Après refroidissement, on retire une plaque rigide, lisse et homogène.

Le même essai effectué avec d'autres composés isocyanates (TDI bloqué avec ε-caprolactame, IPDI bloqué avec ε-caprolactame, TDI dimérisé (méthidione) conduit à des résultats analogues.

Exemple 13

Cet exemple illustre la réalisation de pièces moulées par la technique réaction-injection-moulage.

Pour ce faire, on a utilisé une machine MARTIN SWEETS du type FLEXAMATIC RHP 1 pouvant travailler jusqu'à 235°C.

Si nous désignons par A et B les deux matières qui doivent être judicieusement mélangées avant introduction dans le moule, cette machine comprend essentiellement: deux lignes A et B constituées chacune de:

— une capacité de stockage
— un cylindre doseur alimenté par un étage d'une pompe hydraulique doseuse
— un clapet

ces deux lignes aboutissant à une tête de mélange (dans laquelle se trouve chaque clapet) et à un moule pour plaquettes carrées de dimensions 305 × 305 × 3 mm, ce moule étant au contact de la tête de mélange.

La pompe doseuse double étage (un étage par produit) débite de façon régulière de l'huile au niveau des ceux vérins des cylindres de dosage. Chaque vérin actionne par son mouvement un piston plongeur dans le cylindre doseur et à ce déplacement correspond un débit de matière dans la ligne A ou la ligne B.

Le cylindre plongeur de chaque ligne fait pénétrer la matière dans le circuit. La matière passe par le clapet de la tête de mélange et peut être soit ramenée éventuellement dans le réservoir de stockage, soit être injectée dans le moule à l'ouverture du piston central de fermeture de la tête de mélange.

La configuration du clapet (siège + pointeau) est telle qu'elle permet le passage de la matière à travers un capillaire de diamètre parfaitement connu. La pression et la température des matières A et B sont mesurées un peu avant les clapets.

Ces clapets étant situés face à face dans la tête de mélange, ce mélange se fait donc dans la chambre quand le piston de la tête s'ouvre afin de permettre l'injection dans le moule.

Dans l'essai relaté ci-dessous, circulent:

— dans la ligne A, un oligomère de copolyamide 6—11 (60% caprolactame — 40% acide II-aminoun-

décanoïque) α-ω diamine de masse moléculaire en nombre égale à 3000;

— dans la ligne B, du DESMODUR EL 4, polyisocyanate à base de toluylène diisocyanate fabriqué par la Société BAYER.

| | LIGNE A | LIGNE B |
|---|---|---|
| NATURE DU PRODUIT | PA 6-11 di $NH_2$ | DESMODUR EL 4 |
| Température matière, en °C | 190 | 130 |
| Débit huile pompe doseuse, en cc/sec. | 83 | 79 |
| Diamètre des clapets, en mm | 3 | 1,04 |
| Température tête de mélange, en °C | 160 | |
| Pression matière avant injection, en bars | 25 | 21 |
| Débit matière avant injection, en gr/sec. | 83,75 | 33 |
| Pression matière pendant l'injection dans le moule en bars | 20 | 21 |
| Température du moule, en °C | 190 | |
| Durée de remplissage du moule, en sec. | 7 | |
| Durée de maintien dans le moule, en min. | 10 | |

On obtient de la sorte de plaquettes régulières parfaitement moulées.

**Revendications**

1. Procédé de fabrication d'objets moulés à base de polyamide par réaction injection et/ou moulage consistant à mélanger deux constituants d'une composition réactive liquide avant injection et/ou moulage caractérisé en ce que l'un des constituants est un oligomère difonctionnel de polyamide de masse moléculaire comprise entre 300 et 6000 dont les fonctions sont choisies dans le groupe amine et acide carboxylique et en ce que le deuxième constituant est un polyisocyanate de viscosité à l'état fondu inférieure à 10 Pa.s (10.000 cps) à 170°C lesdits constituants étant présents à l'état fondu dans la

composition réactive à une température comprise entre 120 et 300°C et en proportions telles que le rapport molaire

$$\frac{NCO}{NH_2 \text{ ou } COOH}$$

soit compris entre 0,75 et 1.

2. Procédé selon la revendication 1, caractérisé en ce que ledit oligomère polyamide est préparé à partir d'un ou plusieurs aminoacides, lactames, sels de diacides avec des diamines ou mélanges de diacides avec des diamines, ou de mélanges de tous ces monomères, dont la chaîne hydrocarbonée a entre 4 et 14 atomes de carbone.

3. Procédé selon la revendication 2, caractérisé en ce que ledit oligomère polyamide est obtenu par polycondensation avec une diamine, de préférence aliphatique, ayant de 4 à 14 atomes de carbone.

4. Procédé selon la revendication 3, caractérisé en ce que la dite diamine est l'hexaméthylène diamine.

5. Procédé selon la revendication 2, caractérisé en ce que ledit oligomère polyamide est obtenu par polycondensation avec un diacide carboxylique, de préférence aliphatique, ayant de 4 à 20 atomes de carbone.

6. Procédé selon la revendication 5, caractérisé en ce que ledit diacide carboxylique est l'acide adipique ou l'acide 1,12-dodécanedioique.

7. Procédé selon l'une des revendications 1 à 6, caractérisé en ce que ledit polyisocyanate est choisi dans le groupe comprenant le 2,4 ou le 2,6 toluène diisocyanate (T D I), le 4,4 diphénylméthane diisocyanate (M D I), le 1,4 ou le 1,6 hexaméthylène diisocyanate (H D I), le diisocyanate de 1,4 cyclohexyle, le 3-isocyanatométhyl 3,5,5 triméthylcyclohexylisocyanate (I P D I) et les triisocyanates tels que le triphénylméthane triisocyanate, des composés supérieurs obtenus par dimérisation, trimérisation ou cyclotrimérisation d'isocyanates, et des prépolymères résultant de la réaction d'addition d'un diisocyanate sur un polyesterpolyol ou polylétherpolyol.

8. Procédé selon l'une des revendications 1 à 7, caractérisé en ce que ledit polyisocyanate est le produit d'addition d'un polyisocyanate et d'un composé à hydrogène mobile, ou agent masquant, apte à regénérer à haute température le polyisocyanate de départ.

9. Procédé selon la revendication 8, caractérisé en ce que l'agent masquant est choisi dans le groupe constitué par les alcools, les phénols et les lactames.

10. Procédé selon la revendication 8, caractérisé en ce que ledit polyisocyanate est le produit obtenu par cyclotrimérisation d'IPDI.

11. Procédé selon l'une des revendications 1 à 10, caractérisé en ce qu'elle comprend un composé α,ω diol tel que les polyétherdiols, obtenus par polymérisation d'époxydes, ou les polyesterdiols, obtenus par polycondensation de glycols et de diacides.

12. Procédé selon l'une des revendications 1 à 11 caractérisé en ce qu'on associe aux constituants une trame solide.

**Patentansprüche**

1. Verfahren zur Herstellung von Formteilen auf Basis von Polyamid durch Spritzgußreaktion und/oder Formpressen, darin bestehend, daß man zwei Bestandteile einer reaktiven flüssigen Zusammensetzung vor dem Spritzgießen und/oder Formpressen vermischt, dadurch gekennzeichnet, daß einer der Bestandteile ein difunktionelles Oligomer eines Polyamids mit einer Molekularmasse zwischen 300 und 6000 ist, dessen funktionelle Gruppen ausgewählt werden aus der Gruppe der Amine und Carbonsäuren und dadurch daß der zweite Bestandteil ein Polyisocyanat ist mit einer Viskosität in geschmolzenem Zustand unterhalb von 10 Pa.s (10.000 cps) bei 170°C, wobei diese Bestandteile in geschmolzenem Zustand in der reaktiven Zusammensetzung anwesend sind bei einer Temperatur zwischen 120 und 300°C und in solchen Mengen, daß das molare Verhältnis

$$\frac{NCO}{NH_2 \text{ oder } COOH}$$

zwischen 0,75 und 1 liegt.

2. Verfahren nach Anspruch 1, dadurch gekennzeichnet, daß das Polyamid-Oligomer hergestellt wird ausgehend von einer oder mehreren Aminosäuren, Lactamen, Salzen von dibasischen Säuren mit Diaminen oder Gemischen von dibasischen Säuren mit Diaminen oder Gemischen all derjenigen Monomeren, deren Kohlenwasserstoffkette zwischen 4 und 14 Kohlenstoffatome aufweist.

3. Verfahren nach Anspruch 2, dadurch gekennzeichnet, daß dieses Polyamid-Oligomere erhalten wird durch Polykondensation mit einem Diamin, das vorzugsweise ein aliphatisches ist, und 4 bis 14 Kohlenstoffatomen aufweist.

4. Verfahren nach Anspruch 3, dadurch gekennzeichnet, daß das Diamin Hexamethylendiamin ist.

5. Verfahren nach Anspruch 2, dadurch gekennzeichnet, daß das Polyamid-Oligomere erhalten wird durch Polykondensation mit einer dibasischen Carbonsäure, vorzugsweise einer aliphatischen mit 4 bis 20 Kohlenstoffatomen.

6. Verfahren nach Anspruch 5, dadurch gekennzeichnet, daß die dibasische Carbonsäure Adipinsäure oder 1,12-Dodecandicarbonsäure ist.

7. Verfahren nach einem der Ansprüche 1 bis 6, dadurch gekennzeichnet, daß das Polyisocyanat ausgewählt wird aus der Gruppe umfassend das 2,4- oder 2,6-Toluoldiisocyanat (T D I), das 4,4-Diphenylmethandiisocyanat (M D I), das 1,4- oder das 1,6-Hexamethylendiisocyanat (H D I), das 1,4-Cyclohexyldiisocyanat, das 3-Isocyanatomethyl-3,5,5-trimethylcyclohexylisocyanat (I P D I) und die Triisocyanate so wie das Triphenylmethantriisocyanat, höhere Verbindungen erhalten durch Dimerisation, Trimerisation oder Cyclotrimerisation von Isocyanaten, sowie die Prepolymeren, die durch Additionsreaktion eines Diisocyanats mit einem Polyesterpolyol oder Polyetherpolyol erhältlich sind.

8. Verfahren nach einem der Ansprüche 1 bis 7, dadurch gekennzeichnet, daß das Polyisocyanat das Produkt der Addition eines Polyisocyanats und einer Verbindung mit beweglichem Wasserstoff ist oder ein Maskierungsagens, das geeignet ist bei hoher Temperatur das Ausgangspolyisocyanat zu regenerieren.

9. Verfahren nach Anspruch 8, dadurch gekennzeichnet, daß das Maskierungsagens ausgewählt wird aus der Gruppe bestehend aus den Alkoholen, den Phenolen und den Lactamen.

10. Verfahren nach Anspruch 8, dadurch gekennzeichnet, daß das Polyisocyanat dasjenige Produkt ist, das erhältlich ist durch Cyclotrimerisation des IPDI.

11. Verfahren nach einem der Ansprüche 1 bis 10, dadurch gekennzeichnet, daß es umfaßt eine α,ω-Diol-Verbindung sowie de Polyetherdiole, die erhältlich sind durch Polymerisation von Epoxiden, oder die Polyesterdiole, die erhältlich sind durch Polykondensation von Glykolen und dibasischen Säuren.

12. Verfahren nach einem der Ansprüche 1 bis 11, dadurch gekennzeichnet, daß man den Bestandteilen einen festen Schuß hinzufügt.

**Claims**

1. Process for the manufacture of polyamide base moulded objects by injection and/or moulding reaction consisting in mixing two constituents of a liquid reactive composition before injection and/or moulding, characterised in that one of the constituents is a difunctional oligomer or a polyamide of a molecular mass comprised between 300 and 6000, the functional groups of which are selected from amines and carboxylic acids, and in that the second constituent is a polyisocyanate having a viscosity in the molten state below 10 Pa.s (10,000 cps) at 170°C, said constituents being present in the molten state at a temperature comprised between 120 and 300°C and in proportions such that the molar ratio

$$\frac{NCO}{NH_2 \text{ or } COOH}$$

is comprised between 0.75 and 1.

2. Process according to claim 1, characterised in that said polyamide oligomer is prepared from one or more amino-acids, lactams, diacid salts with diamines or mixtures of diacids with diamines, or mixtures of all these monomers, the hydrocarbon chain of which has between 4 and 14 carbon atoms.

3. Process according to claim 2, characterised in that said polyamide oligomer is obtained by polycondensation with a diamine, preferably aliphatic, having 4 to 14 carbon atoms.

4. Process according to claim 3, characterised in that said diamine is hexamethylene diamine.

5. Process according to claim 2, characterised in that said polyamide oligomer is obtained by polycondensation with a carboxylic diacid, preferably aliphatic, having for 4 to 20 carbon atoms.

6. Process according to claim 5, characterised in that said carboxylic diacid is adipic acid or 1,12-dodecane-dioic acid.

7. Process according to one of claims 1 to 6, characterised in that said polyisocyanate is chosen from the group comprising 2,4 or 2,6 toluene diisocyanate (T D I), 4,4 diphenylmethane diisocyanate (M D I), 1,4 or 1,6 hexamethylene diisocyanate (H D I), 1,4 cyclohexyl diisocyanate, 3-isocyanatomethyl 3,5,5 trimethylcyclohexylisocyanate (I P D I) and triisocyanates such as triphenylmethane triisocyanate, higher ocmpounds obtained by dimerization, trimerization or cyclotrimerization of isocyanates, and prepolymers resulting from the addition reaction of a diisocyanate on a polyester-polyol or polyetherpolyol.

8. Process according to one of claims 1 to 7, characterised in that said polyisocyanate is the addition product of a polyisocyanate and of a compound with labile hydrogen, or masking agent, able to regenerate the starting polyisocyanate at high temperature.

9. Process according to claim 8, characterised in that the masking agent is selected from the group consisting of alcohols, phenols and lactams.

10. Process according to claim 8, characterised in that said polyisocyanate is the product obtained by cyclotrimerization of IPDI.

11. Process according to one of claims 1 to 10, characterised in that it comprises an α,ω diol such as polyetherdiols, obtained by the polymerization of epoxides, or polyesterdiols, obtained by polycondensation of glycols and diacids.

12. Process according to one of claims 1 to 11, characterised in that a solid grid is associated with the constituents.